# EUROPÄISCHE PATENTSCHRIFT

(11) **EP 1 630 925 B1**
(45) Veröffentlichungstag und Bekanntmachung des Hinweises auf die Patenterteilung: **16.05.2018**
(21) Anmeldenummer: 05016136.3
(22) Anmeldetag: 26.07.2005
(51) Int. Cl.: H02J 7/00

(54) **Anordnung zum Laden von mindestens zwei Batterien**
Device for charging at least two batteries
Dispositif pour charger au moins deux batteries

(30) Priorität: 28.08.2004 DE 102004041722
(43) Veröffentlichungstag der Anmeldung: 01.03.2006
(73) Patentinhaber: Jungheinrich Aktiengesellschaft, 22047 Hamburg (DE)
(72) Erfinder: Rautmann, Jürgen, Dipl.-Phys., 24558 Henstedt-Ulzburg (DE); von Berg, Kai, Dipl.-Ing., 24539 Hamburg (DE)
(74) Vertreter: Hauck Patentanwaltspartnerschaft mbB

(56) Entgegenhaltungen:
- FR-A1- 2 691 022
- GB-A- 2 242 794
- US-A- 5 689 172
- US-B1- 6 191 552

## Beschreibung

Die Erfindung bezieht sich auf eine Anordnung zum Laden von mindestens zwei Batterien nach Patentanspruch 1. Die Batterien von batteriebetriebenen Flurförderzeugen müssen nach Gebrauch ständig neu aufgeladen werden. Dies geschieht mit Hilfe eines Ladegeräts, das üblicherweise in einer Ladestation am Netz angeschlossen ist und zu der die Batterien der Flurförderzeuge transportiert werden. Alternativ ist natürlich auch möglich, die Flurförderzeuge mit eingebauter Batterie zu einer Ladestation zu bringen. Daneben ist es auch bekannt geworden, Ladegeräte in ein Flurförderzeug zu integrieren. Die vorliegende Erfindung befaßt sich hingegen mit dem Laden von Batterien, bei denen das Ladegerät vom Flurförderzeug getrennt ist.

Flurförderzeuge sind üblicherweise nicht rund um die Uhr im Einsatz, sondern zum Beispiel nur für eine Schicht. Beträgt die Einsatzdauer acht Stunden, stehen 16 Stunden Ladezeit zur Verfügung. Wenn man davon ausgeht, dass eine Ladezeit von acht Stunden ausreicht, können mit einem Ladegerät zwei Batterien nacheinander aufgeladen werden. Damit ein solcher Ladevorgang erfolgen kann, ist entsprechendes Bedienpersonal erforderlich, das nach Aufladung der ersten Batterie diese von dem Ladegerät trennt und die nächste Batterie mit dem Ladegerät verbindet. Dieser Aufwand ist relativ hoch, zumal die beschriebene Umsetzung meist zur Nachtzeit erfolgen muß.

Die derzeitigen Ladegeräte sind so ausgeführt, dass sie das Laden automatisch beenden, sobald feststeht, dass die Batterie aufgeladen ist. Den Voll-Ladungszustand kann man auf unterschiedliche Weise ermitteln, indem z.B. Strom und/oder Spannung und/oder Energiemenge gemessen wird. Ist dieser Zustand erreicht, wird das Ladegerät automatisch elektrisch von der Batterie getrennt. Es ist auch bekannt, einer Batterie eine Erfassungsvorrichtung zuzuordnen, welche den Voll-Ladungszustand erkennt, der entweder drahtlos oder über eine Signalleitung auf das Ladegerät übertragen wird und eine Abschaltung bewirkt. Es ist ferner bekannt, das Ladegerät so auszuführen, dass eine Aufladung einer Batterie automatisch erfolgt, wenn das Ladegerät durch geeignete Messung feststellt, dass eine aufzuladende Batterie angeschlossen ist. Aus FR 2 691 022 A1 ist eine Anordnung zum Laden von mindestens zwei Traktionsbatterien bekannt. Aus DE 200 13 399 U1 ist eine Ladestation für elektrisch betriebene Fahrzeuge bekannt geworden, bei der eine Stromversorgungsschaltung mehrere Ladesteckdosen aufweist, von denen jede mit einem elektrisch betriebenen Fahrzeug verbindbar ist. Die Verbindung erfolgt über Relais, wobei die verschiedenen Relais nach einem bestimmten Programm automatisch so gesteuert werden, dass eine wirtschaftliche Auslegung erfolgt und Überlasten vermieden sind.

Aus EP 0 314 155 B1 ist eine Ladestation für Batterien bekannt geworden, bei der ein sequentielles Laden von mehreren Batterien erfolgt, wobei z.B. die Batterien, die am wenigsten aufgeladen werden müssen, zuerst beladen werden. Das Ladeprogramm richtet sich wiederum danach, auf welche Weise eine effiziente Ladung möglich ist, wobei diese durch Messung von unterschiedlichen Parametern ermittelt wird, z.B. abhängig gemacht wird vom jeweiligen Ladezustand der Batterien.

Aus EP 1 332 539 ist bekannt geworden, die einzelnen Zellen einer Batterie sequentiell zu beladen, wobei eine Steuervorrichtung die Umschaltung von einer Zelle zur nächsten steuert nach Maßgabe des Erreichens einer definierten Ladekennlinie.

Der Erfindung liegt die Aufgabe zugrunde, eine Anordnung zum Laden von mindestens zwei Batterien zu schaffen, mit der mit einem geringen Aufwand ein Ladegerät in einem vorgegebenen Zeitraum eine größtmögliche Zahl von Batterien automatisch beladen werden kann.

Diese Aufgabe wird durch die Merkmale des Patentanspruchs 1 gelöst.

Bei der Erfindung ist mit dem Ausgang des Ladegeräts ein Eingang einer Umschaltvorrichtung verbunden, die mindestens zwei Ausgänge aufweist, die über jeweils ein Ladekabel mit den mindestens zwei Batterien verbindbar sind. Der Eingang der Umschaltvorrichtung ist jeweils nur mit einem Ausgang verbunden, wobei durch eine geeignete Ansteuerung dafür gesorgt wird, dass der Eingang wahlweise mit einem vorgegebenen Ausgang verbunden werden kann. Der Eingang der Umschaltvorrichtung wird auf einen anderen Ausgang umgeschaltet, wenn die Umschaltvorrichtung als Umschaltsignal das Signal des Erfassungsmittels erhält.

Es sei als Beispiel angenommen, dass ein Nutzer zwei Flurförderzeuge betreibt, die während einer Arbeitsschicht, z.B. von 8 bis 14 Uhr, in Betrieb sind. Während des Betriebes werden die Batterien der Fahrzeuge mehr oder weniger entladen. Mit Hilfe der Erfindung wird zunächst die Batterie des ersten Fahrzeugs geladen, von z.B. 14 bis 22 Uhr. Anschließend erfolgt eine Umschaltung auf die Batterie des anderen Fahrzeugs, das z.B. von 22 bis 6 Uhr morgens geladen wird. Dieser Ladeprozeß erfolgt bei der erfindungsgemäßen Anordnung automatisch, indem die Umschaltung des Anschlusses des Ladegeräts von der einen auf die andere Batterie dann vorgenommen wird, wenn das Erfassungsmittel feststellt, dass die erste geladene Batterie weitgehend voll oder ständig aufgeladen ist. Daraufhin wird ein entsprechendes Umschaltsignal für die Umschaltvorrichtung erzeugt, sodass automatisch die Aufladung der zweiten Batterie abläuft.

Bei der erfindungsgemäßen Anordnung kann die Umschaltvorrichtung nach einer Ausgestaltung der Erfindung in das Ladegerät integriert oder außen am Gehäuse des Ladegerätes angebracht sein. Vorzugsweise wird die Umschaltvorrichtung, die einen geeigneten Schalter aufweist, in der Nähe des üblicherweise vorgesehenen Ausgangs eines Ladegeräts angeordnet, damit der Schalter unmittelbar mit dem Ausgang der Batterie verbunden werden kann. Der Schalter weist eine geeignete Betätigung auf. Erfindungsgemäß kann nach einer weiteren Ausgestaltung der Erfindung das in einem Ladegerät ohnehin vorhandene Erfassungsmittel für den Ladezustand der Batterie bzw. für die Annäherung an den Voll-Ladezustand ein Signal erzeugen, das nicht nur für die Abschaltung des Ladegeräts Sorge tragen würde, sondern mit dem auch die Umschaltung der Umschaltvorrichtung bewerkstelligt werden kann. Ist das Ladegerät so ausgeführt, dass eine Aufladung automatisch beginnt, wenn eine entladene Batterie angeschlossen wird, ist die Umschaltung des Ladegeräts auf eine andere Batterie mit Hilfe der Erfindung unproblematisch, da selbst ein abgeschaltetes Ladegerät sich erneut einschaltet, wenn eine entladene Batterie angeschlossen ist. Ist ein automatischer Ladebeginn nicht vorgesehen, muß eine Abschaltung des Ladegeräts bei Erreichen der Voll-Ladung einer Batterie verhindert werden. Würde nämlich in diesen Zustand umgeschaltet werden, würde die zweite Batterie wegen des abgeschalteten Ladegeräts nicht mehr automatisch beladen. In diesem Falle wäre es vorteilhaft, wenn die Umschaltung der Umschaltvorrichtung zu einem Zeitpunkt erfolgt, an dem die erste Batterie noch nicht vollständig aufgeladen ist und mithin noch nicht eine automatische Abschaltung des Ladegeräts verursacht hat.

Es ist in einer anderen Ausgestaltung der Erfindung auch möglich, das Umschaltsignal in der Umschaltvorrichtung selbst zu erzeugen, indem diese mit einem Erfassungsmittel versehen ist, das den Ladezustand der jeweiligen Batterie erfassen kann.

Die erfindungsgemäße Umschaltvorrichtung kann auch separat vom Ladegerät vorgesehen sein, und z.B. in einem separaten Gehäuse untergebracht sein. Sie wird mit Hilfe eines Kabels oder dergleichen mit dem Ladegerät verbunden. Vom Umschaltgerät können dann zwei oder mehr Ladekabel parallel abgehen, die mit zu beladenen Batterien verbunden werden. Für diesen Fall kann es zweckmäßig sein, wenn das Umschaltgerät über eigene Erfassungsmittel bezüglich des Ladezustands der jeweiligen Batterie versehen ist. Es ist jedoch auch denkbar, das Erfassungsmittel des Ladegeräts, das normalerweise in jedem Ladegerät eingebaut ist, dazu zu verwenden, das Umschaltsignal zu erzeugen. In diesem Falle ist jedoch erforderlich, eine zusätzliche Leitung zwischen Ladegerät und Umschaltvorrichtung vorzusehen, über welche dann entweder ein Umschaltsignal übertragen wird, das eine Betätigungsvorrichtung für den Schalter in der Umschaltvorrichtung aktiviert oder indem unmittelbar ein Betätigungssignal für die Betätigungsvorrichtung des Schalters vom Ladegerät auf die Umschaltvorrichtung übertragen wird.

Erfolgt die Erfassung des Ladezustands unmittelbar an der Batterie, ist es auch möglich, zwischen die Batterie und Umschaltvorrichtung eine Kommunikation drahtlos oder drahtbehaftet vorzusehen, um automatisch das Umschaltsignal zu erzeugen.

Das Erfassungsmittel im Ladegerät und/oder in der Umschaltvorrichtung zur Ermittlung des Ladezustands einer Batterie kann unterschiedliche Parameter erfassen, beispielsweise den Ladestrom und/oder die Ladespannung und/oder die in die Batterie eingetragene Energie. Es ist jedoch auch möglich, zeitabhängig zu arbeiten, indem z.B. mit Hilfe einer Zeitschaltuhr die Ladezeit eingestellt wird. In diesem Fall könnte nach Ablauf einer ersten Ladezeit von der Zeitschaltuhr ein Umschaltsignal für die Umschaltvorrichtung erzeugt werden, sodass automatisch in einer zweiten Ladezeit die nächste Batterie aufgeladen wird.

Zwei Ausführungsbeispiele der Erfindung werden nachfolgend anhand von Zeichnungen erläutert.
- Fig. 1: zeigt schematisch eine erste Ausführungsform der erfindungsgemäßen Anordnung.
- Fig. 2: zeigt schematisch eine zweite Ausführungsform der erfindungsgemäßen Anordnung.

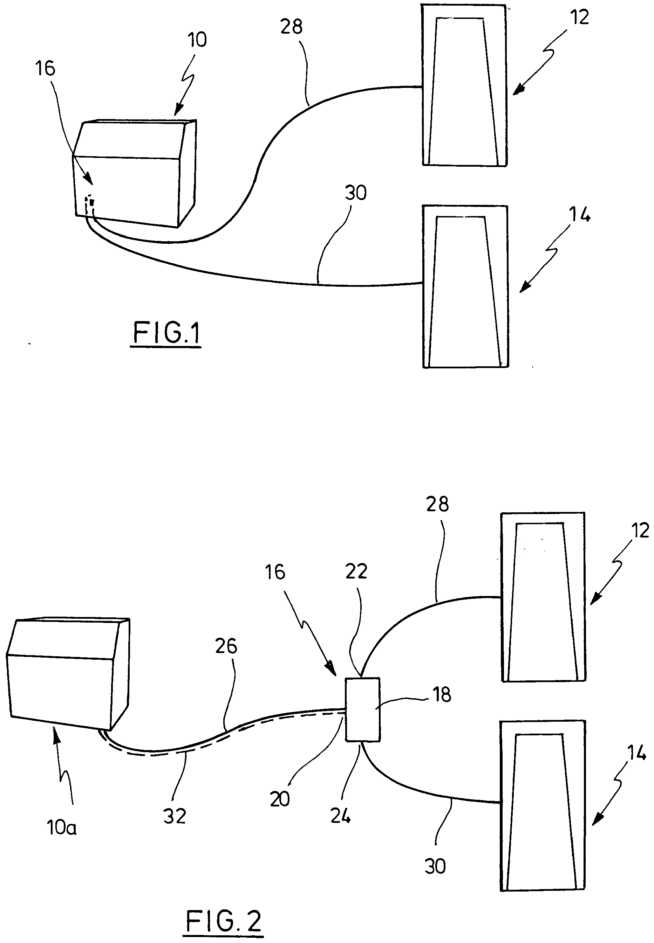

In den Figuren 1 und 2 ist jeweils ein Ladegerät 10 bzw. 10a zu erkennen, mit dem zwei Batterien 12, 14 aufgeladen werden. Zunächst sei auf Fig. 2 Bezug genommen.

In Figur 2 ist bei 16 eine Umschaltvorrichtung in einem Gehäuse 18 untergebracht. Einzelteile der Umschaltvorrichtung sind nicht gezeichnet, sollen jedoch zumindest angedeutet werden. Die Umschaltvorrichtung 16 weist einen Eingang 20 auf und zwei Ausgänge 22, 24. Der Eingang 20 kann über eine Steckverbindung mit einem Kabel 26 an ein Ladegerät 10a angeschlossen werden. Die Verbindung des Kabels 26 mit dem Ladegerät 10a kann ebenfalls über eine Steckverbindung erfolgen oder auf andere Weise. Mit den Ausgängen 22, 24 sind jeweils Kabel 28, 30 verbunden, wiederum z.B. über Steckverbindungen. Die Kabel 28, 30 sind sogenannte Ladekabel, die in geeigneter Weise mit den Batterien 12, 14 verbindbar sind. Die Batterien sind z.B. Traktionsbatterien von Flurförderzeugen.

Die Umschaltvorrichtung 16 enthält einen Schalter, beispielsweise ein Schütz, ein Relais oder einen Halbleiterschalter, der so beschaffen ist, dass er den Eingang 20 jeweils nur mit einem der Ausgänge 22 oder 24 verbindet. In der Umschaltvorrichtung 16 ist daher ferner eine Schaltbetätigung vorgesehen, welche den Schalter wahlweise so stellt, dass der Eingang 20 mit dem gewünschten Ausgang 22, 24 verbunden wird.

Die Umschaltvorrichtung 16 enthält ferner ein Erfassungsmittel, mit dem der Ladezustand der jeweils geladenen Batterie 12, 14 erfaßt werden kann, beispielsweise über Strom und/oder Spannung während des Ladens oder auch durch Erfassung der noch vorhandenen Kapazität vor Beginn der Beladung und während des Ladevorgangs. Derartige Erfassungsmittel sind an sich bekannt. Im vorliegenden Fall erzeugen die Erfassungsmittel ein Umschaltsignal für die Betätigungsvorrichtung des Schalters, wenn das Erreichen des Voll-Ladezustands festgestellt wird.

Es sei unterstellt, dass zu Beginn eines Ladeprozesses das Ladegerät 10a über eine entsprechende Schalterstellung in der Umschaltvorrichtung 16 die Batterie 12 belädt. Der Ladebeginn setzt sich automatisch in Gang, sobald die mehr oder weniger leere Batterie 12 an das Ladegerät 10a angeschlossen ist. Das Ladegerät 10a ist nämlich in der Lage, festzustellen, ob die angeschlossene Batterie eine Aufladung benötigt. Ist dies der Fall, beginnt der Ladeprozeß. Wird mit Hilfe des Erfassungsmittels in der Umschaltvorrichtung 16 festgestellt, dass die Batterie 12 voll ist, erzeugt das Erfassungsmittel ein Umsteuersignal, und der Schalter in der Umschaltvorrichtung 16 verbindet den Eingang 2 0 mit dem Ausgang 24, sodass die Batterie 14 automatisch geladen wird, bis auch diese ihren Vollzustand erreicht. Ein Eingriff eines Bedieners ist für die Ladung der beiden Batterien 12, 14 nicht erforderlich.

Sollte die Umschaltvorrichtung 16 kein Mittel zur Erfassung des Ladezustands der Batterien 12, 14 aufweisen, kann auch das entsprechende Mittel im Ladegerät 10a genommen werden. Ladegeräte haben üblicherweise derartige Erfassungsmittel und schalten sich automatisch ab, wenn der Voll-Ladezustand erreicht ist. Damit für diesen Fall die Umschaltvorrichtung 16 auf die Batterie 14 umschalten kann, ist eine Betätigung des Schalters in der Umschaltvorrichtung 16 vom Ladegerät 10a aus nötig. Zu diesem Zweck kann eine zusätzliche Leitung, die gestrichelt bei 32 eingezeichnet ist, vorgesehen werden, um über diese Leitung 32 ein Steuersignal oder ein Befehlssignal für die Umschaltvorrichtung 16 zu übertragen. Anstelle einer Leitung 32 kann auch eine drahtlose Übertragung erfolgen.

Die Ausführungsform nach Figur 1 unterscheidet sich von der nach Figur 2 dadurch, dass die Umschaltvorrichtung 16 in das Gehäuse des Ladegeräts 10 integriert ist. Der innere Aufbau kann jedoch ähnlich zu der Vorrichtung 16 nach Figur 2 sein, indem auch ein Schalter vorgesehen ist, der wahlweise die Umschaltvorrichtung 16 und damit das Ladegerät 10 mit einem der Ladekabel 28, 30 verbindet. Der Eingang der Umschaltvorrichtung 16 ist unmittelbar mit dem Ausgang des Ladegeräts verbunden, wobei zu Umschaltzwecken die im Ladegerät 10 ohnehin vorhandenen Erfassungsmittel verwendet werden, um bei Erreichen des Voll-Ladezustands einer Batterie eine Umschaltung in der Umschaltvorrichtung 16 herbeizuführen. Es versteht sich, dass die Umschaltvorrichtung 16 nach Figur 1 auch eine eigene Erfassungsmöglichkeit für die Erfassung des Ladezustands der Batterien beinhaltet, um die beschriebene automatische Umschaltung von der einen auf die andere Batterie herbeizuführen.

Bei der Ausführungsform nach Figur 1 sind Modifikationen am Ladegerät erforderlich, um es erfindungsgemäß auszurüsten. Bei der Ausführungsform nach Figur 2 ist eine Änderung am Ladegerät nicht erforderlich. Der Aufwand für die Umschaltvorrichtung 16 ist relativ klein. Er ist in jedem Fall deutlich niedriger als die Verwendung eines zweiten Ladegerätes.

## Patentansprüche

1. Anordnung zum Laden von mindestens zwei Traktionsbatterien (12, 14) von Flurförderzeugen, mit einem Ladegerät (10a), Mitteln zur Erfassung des Ladezustands der über ein Ladekabel (26) an das Ladegerät (10a) angeschlossenen Batterie (12, 14), die ein Signal erzeugen, wenn die Batterie (12, 14) zumindest annähernd vollständig aufgeladen ist, sowie Schaltmitteln (16) zur Beendigung des Ladens, wobei mit dem Ausgang des Ladegerätes (10a) ein Eingang (20) einer Umschaltvorrichtung (16) verbunden ist, die mit mindestens zwei Ausgängen (22, 24) versehen ist, die über mindestens zwei Ladekabel (28, 30) gleichzeitig mit den mindestens zwei Batterien (12, 14) verbindbar sind, wobei der Eingang (20) wahlweise mit einem der mindestens zwei Ausgänge (22, 24) verbindbar ist und der Eingang der Umschaltvorrichtung auf einen anderen Ausgang umgeschaltet wird, wenn die Umschaltvorrichtung (16) als Umschaltsignal das Signal der Erfassungsmittel erhält, wobei die Umschaltvorrichtung (16) in einem separaten Gehäuse (18) angeordnet und über ein weiteres Ladekabel (26) mit dem Ladegerät (10a) verbindbar ist, wobei ferner das Erfassungsmittel (46a) den Strom und/oder die Spannung und/oder die Kapazität der Traktionsbatterie misst und die Umschaltung der Umschaltvorrichtung (16) erfolgt kurz bevor die Traktionsbatterie (12, 14) vollständig aufgeladen ist.

2. Anordnung nach Anspruch 1, **dadurch gekennzeichnet, dass** die Umschaltvorrichtung (16) ein eigenes Erfassungsmittel zur Erfassung des Ladezustands einer Batterie (12, 14) aufweist, welche das Umschaltsignal für die Umschaltvorrichtung (16) erzeugt.

3. Anordnung nach Anspruch 1 oder 2, **dadurch gekennzeichnet, dass** das Erfassungsmittel eine Zeitschaltuhr enthält.

4. Anordnung nach einem der Ansprüche 1 bis 3, **dadurch gekennzeichnet, dass** die Umschaltvorrichtung ein Schütz, ein Relais, einen Halbleiterschalter oder dergleichen aufweist.

5. Anordnung nach einem der Ansprüche 2 bis 4, **dadurch gekennzeichnet, dass** das Erfassungsmittel im Gehäuse (18) der Umschaltvorrichtung (16) angeordnet ist.

6. Anordnung nach einem der Ansprüche 1 bis 5, **dadurch gekennzeichnet, dass** zwischen dem Ladegerät (10a) und der Umschaltvorrichtung (16) eine drahtlose oder drahtbehaftete Steuerstrecke (32) angeordnet ist, zur Übertragung eines Steuersignals von dem Ladegerät (10a) zur Umschaltung der Umschaltvorrichtung (16) bzw. eines Umschaltsignals des Erfassungsmittels im Ladegerät (10a).

7. Anordnung nach einem der Ansprüche 1 bis 6, **dadurch gekennzeichnet, dass** zwischen dem Ladegerät (10a) und der Umschaltvorrichtung eine drahtlose oder drahtbehaftete Übertragungsstrecke angeordnet ist, zur Übertragung des Umschaltsignals vom Erfassungsmittel des Ladegeräts (10a), wobei ein Umschaltmittel nach Maßgabe des Umschaltsignals einen Steuerbefehl für die Umschaltvorrichtung erzeugt.

8. Anordnung nach einem der Ansprüche 1 bis 7, **dadurch gekennzeichnet, dass** das Ladegerät (10, 10a) eine Schaltungsanordnung für den automatischen Ladebeginn beim Anschluß einer zu ladenden Traktionsbatterie (12, 14) aufweist.

## Claims

1. A system for charging at least two traction batteries (12, 14) of industrial trucks, with a charger (10a), means for detecting the charging status of the battery (12, 14) which is connected to the charger (10a) via a charging cable (26), the means generating a signal when the battery (12, 14) is at least almost completely charged, as well as switching means for (16) for ending the charging, an input (20) of a change-over device (16) being connected to the output of the charger (10a), the change-over device being provided with at least two outputs (22, 24), which can be connected simultaneously to the at least two batteries (12, 14) via at least two charging cables (28, 30), wherein the input (20) can be connected at option to one of the least two outputs (22, 24) and the input of the change-over device is switched over to another output when the change-over device (16) receives the signal of the detecting means as change-over signal, the change-over device (16) being arranged in a separate casing (18) and being connected to the charger (10a) via a further charging cable (26), wherein the detecting means (46a) measures in addition the current and/or the voltage and/or the capacity of the traction battery, and the change-over of the change-over device (16) occurs shortly before the traction battery (12, 14) is completely charged.

2. The system according to claim 1, **characterised in that** the change-over device (16) has a proper detection means for detecting the charging status of a battery (12, 14), which generates the change-over signal for the change-over device (16).

3. A system according to claim 1 or 2, **characterised in that** the detection means comprises a timer switch.

4. A system according to one of the claims 1 to 3, **characterised in that** the change-over device comprises a contactor, a relay, a semiconductor switch or the like.

5. A system according to one of the claims 2 to 4, **characterised in that** the detection means is arranged in the casing (18) of the change-over device (16).

6. A system according to one of the claims 1 to 5, **characterised in that** a wireless or wired control path (32) is arranged between the charger (10a) and the change-over device (16) for transmitting a control signal from the charger (10a) to change over the change-over device (16) or a change-over signal of the detection device in the charger (10a).

7. A system according to one of the claims 1 to 6, **characterised in that** a wireless or wired transmission path is arranged between the charger (10a) and the change-over device for transmitting the change-over signal from the detection means of the charger (10a), a change-over means generating a control signal for the change-over device according to the change-over signal.

8. A system according to one of the claims 1 to 7, **characterised in that** the charger (10, 10a) comprises a circuitry for automatic charging start when a traction battery (12, 14) to be charged is being connected.

## Revendications

1. Dispositif pour charger au moins deux batteries de traction (12, 14) de chariots de manutention, avec un chargeur (10a), moyens de détection du niveau de charge de la batterie (12, 14) reliée au chargeur (10a) via un câble de recharge (26), qui génèrent un signal quand la batterie (12, 14) est au moins pratiquement complètement chargée, ainsi que des moyens de commutation (16) pour finir le chargement, une entrée (20) d'un dispositif de commutation (16) étant reliée à la sortie du chargeur (10a), le dispositif de commutation étant doté avec au moins deux sorties (22, 24), qui peuvent être simultanément reliées à les au moins deux batteries (12, 14) via au moins deux câbles de recharge (28, 30), l'entrée (20) pouvant être sélectivement reliée à une des au moins deux sorties (22, 24) et l'entrée du dispositif de commutation est commutée sur une autre sortie quand le dispositif de commutation (16) reçoit le signal des moyens de détection comme un signal de commutation, le dispositif de commutation (16) étant arrangé dans un boîtier séparé (18) et pouvant être relié au chargeur (10a) via un câble de recharge additionnel (26), le moyen de détection (46a) mesurant en outre le courant et/ou la tension et/ou la capacité de la batterie de traction, et la commutation du dispositif de commutation (16) ayant lieu juste avant la batterie de traction (12, 14) est complètement chargée.

2. Dispositif selon la revendication 1, **caractérisé en ce que** le dispositif de commutation (16) comporte un propre moyen de détection pour détecter le niveau de charge d'une batterie (12, 14), qui génère le signal de commutation pour le dispositif de commutation (16).

3. Dispositif selon la revendication 1 ou 2, **caractérisé en ce que** le moyen de détection comporte une minuterie.

4. Dispositif selon une des revendications 1 à 3, **caractérisé en ce que** le dispositif de commutation comporte un contacteur, un relais, un commutateur semi-conducteur ou une chose pareille.

5. Dispositif selon une des revendications 2 à 4, **caractérisé en ce que** le moyen de détection est arrangé dans le boîtier (18) du dispositif de commutation (16).

6. Dispositif selon une des revendications 1 à 5, **caractérisé en ce que** un chemin de contrôle sans ou par fil (32) est arrangé entre le chargeur (10a) et le dispositif de commutation (16) pour transmettre un signal de contrôle du chargeur (10a) pour commuter le dispositif de commutation (16) ou respectivement un signal de commutation du moyen de détection dans le chargeur (10a).

7. Dispositif selon une des revendications 1 à 6, **caractérisé en ce que** un chemin de transmission sans ou par fil est arrangé entre le chargeur (10a) et le dispositif de commutation pour transmettre le signal de commutation du moyen de détection du chargeur (10a), un moyen de commutation générant un signal de contrôle pour le dispositif de commutation conformément au signal de commutation.

8. Dispositif selon une des revendications 1 à 7, **caractérisé en ce que** le chargeur (10, 10a) comporte un système de circuit pour commencer le chargement quand une batterie de traction (12, 14) qu'on veut charger est connectée.
